# EUROPEAN PATENT APPLICATION

(11) **EP 4 583 031 A1**
(43) Date of publication of application: **09.07.2025**
(21) Application number: 24760252.7
(22) Date of filing: 15.02.2024
(51) Int. Cl.: G06Q 20/32

(54) **MONEY TRANSACTION SYSTEM, INFORMATION TERMINAL, COMPUTER PROGRAM, AND MONEY TRANSACTION METHOD**

(30) Priority: 20.02.2023 JP 2023024538
(71) Applicant: Variety M-1 Inc., Yokohama-shi, Kanagawa, 231-0002 (JP)
(72) Inventor: Mitake, Toshiaki, Yokohama-shi, Kanagawa 231-0002 (JP)
(74) Representative: Gulde & Partner
(86) International application number: PCT/JP2024/005374
(87) International publication number: WO 2024/176952

(57) **Abstract**

Problem: To provide a monetary transaction system, an information terminal, a computer program, and a monetary transaction method that can appropriately conduct a monetary transaction even offline.

Solution: A monetary transaction system executes a monetary transaction based on monetary data between a first information terminal 20 and a second information terminal 10 offline. The first information terminal 20 includes: an acquisition means 26 configured to acquire data of a transaction amount; a payment means 26 configured to, when a user of the first information terminal 20 gives approval for payment of the transaction amount, reduce balance of balance data stored in the first information terminal 20 according to the transaction amount; and a first display means 26 configured to, when reduction of the balance of the balance data has been completed, display payment completion image information on a first image display unit 23. The second information terminal 10 includes: an image reading means 16 configured to cause an image reading unit 11 to read the payment completion image information displayed by the first information terminal 20; and a receiving means 16 configured to, when the payment completion image information has been read, increase balance of balance data stored in the second information terminal 10 according to the transaction amount.

## Description

### TECHNICAL FIELD

The present invention relates to a monetary transaction system, an information terminal, a computer program, and a monetary transaction method that can conduct a monetary transaction based on monetary data such as electronic money between two terminals even offline.

### BACKGROUND ART

Conventionally, mobile monetary transaction systems have been disclosed (for example, PTL 1). In the mobile monetary transaction system, in an environment where an information terminal such as a smartphone carried by a buyer and an information terminal belonging to a seller can connect to a monetary transaction server via a network, the information terminals of the buyer and the seller each access the server to allow a monetary payment process based on monetary data to be executed between the information terminals of the buyer and the seller.

### Citation List

### Patent Literature

Patent Literature 1: Japanese Patent Laid-Open Publication No. 2015-062125

### SUMMARY

### Technical Problem

However, in the conventional monetary transaction system, there has been a problem that, in an environment where network communication is not available, each information terminal is unable to access the monetary transaction server on the network, resulting in a failure to conduct a monetary transaction based on monetary data.

An object of the present invention is to provide a monetary transaction system, an information terminal, a computer program, and a monetary transaction method that can execute a monetary transaction based on monetary data between two information terminals even in an environment where no network is available.

### Solution to Problem

[1] The present invention is summarized as a monetary transaction system according to (1) to (6) below.
   (1) A monetary transaction system including: a first information terminal having a first image display unit and a first image reading unit; and a second information terminal having a second image display unit and a second image reading unit, wherein the monetary transaction system executes a monetary transaction based on monetary data between the first information terminal and the second information terminal offline, wherein the second information terminal includes a second display means configured to display, on the second image display unit, transaction start image information including data of a transaction amount of the monetary transaction, the first information terminal includes: a first storage means configured to store balance data belonging to the first information terminal; a first image reading means configured to cause the first image reading unit to read the transaction start image information displayed on the second image display unit of the second information terminal; an acquisition means configured to acquire the data of the transaction amount from the transaction start image information read by the first image reading unit; a payment means configured to, when a user of the first information terminal gives approval for payment of the transaction amount, reduce balance of the balance data stored in the first storage means according to the transaction amount; and a first display means configured to, when reduction of the balance of the balance data has been completed by the payment means, display payment completion image information on the first image display unit, and the second information terminal includes: a second storage means configured to store balance data belonging to the second information terminal; a second image reading means configured to cause the second image reading unit to read the payment completion image information displayed by the first information terminal; and a receiving means configured to, when the payment completion image information has been read, increase balance of the balance data stored in the second storage means according to the transaction amount.
   (2) The monetary transaction system according to (1) wherein, the second information terminal includes an input means configured to input the transaction amount, and in the second information terminal, the second display means is configured to generate the transaction start image information including transaction information including the transaction amount input by the input means, and display the transaction start image information on the second image display unit, wherein, in the first information terminal, the acquisition means is configured to acquire the transaction information from the transaction start image information, and the first display means is configured to, in order for the user of the first information terminal to give approval for payment of the transaction amount, when the transaction start image information including the transaction information has been read, display an image for requesting the approval on the first image display unit of the first information terminal.
   (3) The monetary transaction system according to (1) or (2) wherein, in the second information terminal, the second display means is configured to generate the transaction start image information including an identification code of the second information terminal and a transaction code of a current transaction, and display the transaction start image information on the second image display unit, wherein, in the first information terminal, the first image reading means is configured to cause the first image reading unit to read the transaction start image information including the identification code of the second information terminal and the transaction code, and the first display means is configured to generate the payment completion image information including the identification code of the second information terminal and the transaction code read from the transaction start image information by the first image reading unit, and display the generated payment completion image information on the first image display unit, wherein, in the second information terminal, the receiving means is configured to determine whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increase the balance of the balance data stored in the second storage means.
   (4) The monetary transaction system according to any one of (1) to (3), wherein the payment completion image information is displayed in an information code having information cells arranged two-dimensionally as information units.
   (5) The monetary transaction system according to any one of (1) to (4), wherein the monetary transaction is performed only within the balance of the balance data of the first information terminal.
   (6) The monetary transaction system according to any one of (1) to (5), wherein the balance data of the first information terminal is stored in the first storage means of the first information terminal in a form included in an information code having information cells arranged two-dimensionally as information units, and the balance data of the second information terminal is stored in the second storage means of the second information terminal also in a form included in an information code having information cells arranged two-dimensionally as information units.

Further, the present invention is summarized as an information terminal according to (7) below.

(7) An information terminal that is a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the second information terminal including: a second storage means configured to store balance data belonging to the second information terminal; an input means configured to input a transaction amount of the monetary transaction; a second display means configured to display, on the second image display unit, transaction start image information including data of the transaction amount input by the input means; a second image reading means configured to cause the second image reading unit to read, when payment completion image information indicating that payment has been completed in the first information terminal is displayed, the payment completion image information displayed by the first information terminal; and a receiving means configured to, when the payment completion image information has been read, increase balance of the balance data stored in the second storage means according to the transaction amount.

Further, the present invention is summarized as a computer program according to (8) or (9) below.

(8) A computer program that is executed by a first information terminal in a monetary transaction system including the first information terminal having a first image display unit and a first image reading unit, and a second information terminal having a second image display unit and a second image reading unit, wherein the monetary transaction system executes a monetary transaction based on monetary data between the first information terminal and the second information terminal offline, the computer program executing: a first storage function to store balance data belonging to the first information terminal; a first image reading function to cause the first image reading unit to read transaction start image information that is displayed on the second image display unit of the second information terminal and includes data of a transaction amount of the monetary transaction; an acquisition function to acquire the data of the transaction amount from the transaction start image information read by the first image reading function; a payment function to, when a user of the first information terminal gives approval for payment of the transaction amount, reduce balance of the balance data stored by the first storage function according to the transaction amount; and a first display function to, when reduction of the balance of the balance data has been completed by the payment function, display payment completion image information on the first image display unit.

(9) A computer program that is executed by a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the computer program executing: a second storage function to store balance data belonging to the second information terminal; a second display function to display, on the second image display unit, transaction start image information including data of a transaction amount of the monetary transaction; an image reading function to cause the second image reading unit to read, when payment completion image information indicating that payment has been completed in the first information terminal is displayed, the payment completion image information displayed by the first information terminal; and a receiving function to, when the payment completion image information has been read, increase balance of the balance data stored by the second storage function according to the transaction amount.

In addition, the present invention is summarized as an offline monetary transaction method according to (10) below.

(10) An offline monetary transaction method for executing a monetary transaction based on monetary data between a first information terminal and a second information terminal offline using the first information terminal having a first image display unit and a first image reading unit, and the second information terminal having a second image display unit and a second image reading unit, the monetary transaction method including: by the first information terminal, in which balance data belonging to the first information terminal is stored, acquiring data of a transaction amount of the monetary transaction, when a user of the first information terminal gives approval for payment of the transaction amount, reducing balance of the balance data stored in the first information terminal according to the transaction amount, and when reduction of the balance of the balance data has been completed, displaying payment completion image information on the first image display unit; and by the second information terminal, in which balance data belonging to the second information terminal is stored, causing the second image reading unit to read the payment completion image information displayed by the first information terminal, and when the payment completion image information has been read, increasing an amount in the balance data stored in the second information terminal according to the transaction amount.

[2] Another aspect of the present invention is summarized as a monetary transaction system according to (11) to (16) below.

(11) A monetary transaction system including: a first information terminal having a first image display unit and a first image reading unit; and a second information terminal having a second image display unit and a second image reading unit, wherein the monetary transaction system executes a monetary transaction based on monetary data between the first information terminal and the second information terminal offline, wherein the second information terminal includes a second display means configured to display, on the second image display unit, transaction start image information including data of a transaction amount of the monetary transaction, the first information terminal includes: a first storage means configured to store balance data belonging to the first information terminal; a first image reading means configured to cause the first image reading unit to read the transaction start image information displayed on the second image display unit of the second information terminal; an acquisition means configured to acquire the data of the transaction amount from the transaction start image information read by the first image reading unit; a payment means configured to, when a user of the first information terminal gives approval for payment of the transaction amount, reduce balance of the balance data stored in the first storage means according to the transaction amount; and a first display means configured to, when reduction of the balance of the balance data has been completed by the payment means, display payment completion image information on the first image display unit, and the second information terminal includes: a second storage means configured to store balance data belonging to the second information terminal; a second image reading means configured to cause the second image reading unit to read the payment completion image information displayed by the first information terminal; and a receiving means configured to, when the payment completion image information has been read, increase balance of the balance data stored in the second storage means according to the transaction amount.

(12) The monetary transaction system according to (11) wherein, the second information terminal includes an input means configured to input the transaction amount, and in the second information terminal, the second display means is configured to generate the transaction start image information including transaction information including the transaction amount input by the input means, and display the transaction start image information on the second image display unit, wherein, in the first information terminal, the acquisition means is configured to acquire the transaction information from the transaction start image information, and the first display means is configured to, in order for the user of the first information terminal to give approval for payment of the transaction amount, when the transaction start image information including the transaction information has been read, display an image for requesting the approval on the first image display unit of the first information terminal.

(13) The monetary transaction system according to (11) or (12) wherein, in the second information terminal, the second display means is configured to generate the transaction start image information including an identification code of the second information terminal and a transaction code of a current transaction, and display the transaction start image information on the second image display unit, wherein, in the first information terminal, the first image reading means is configured to cause the first image reading unit to read the transaction start image information including the identification code of the second information terminal and the transaction code, and the first display means is configured to generate the payment completion image information including the identification code of the second information terminal and the transaction code read from the transaction start image information by the first image reading unit, and display the generated payment completion image information on the first image display unit, wherein, in the second information terminal, the receiving means is configured to determine whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increase the balance of the balance data stored in the second storage means.

(14) The monetary transaction system according to any one of (11) to (13), wherein the payment completion image information is displayed in an information code having information cells arranged two-dimensionally as information units.

(15) The monetary transaction system according to any one of (11) to (14), wherein the monetary transaction is performed only within the balance of the balance data of the first information terminal.

(16) The monetary transaction system according to any one of (11) to (15), wherein the balance data of the first information terminal is stored in the first storage means of the first information terminal in a form included in an information code having information cells arranged two-dimensionally as information units, and the balance data of the second information terminal is stored in the second storage means of the second information terminal also in a form included in an information code having information cells arranged two-dimensionally as information units.

Further, another aspect of the present invention is summarized as an information terminal according to (17) to (22) below.

(17) An information terminal that is a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the second information terminal including: a second storage means configured to store balance data belonging to the second information terminal; an input means configured to input a transaction amount of the monetary transaction; a second display means configured to display, on the second image display unit, transaction start image information including data of the transaction amount input by the input means; a second image reading means configured to cause the second image reading unit to read, when payment completion image information indicating that payment has been completed in the first information terminal is displayed, the payment completion image information displayed by the first information terminal; and a receiving means configured to, when the payment completion image information has been read, increase balance of the balance data stored in the second storage means according to the transaction amount.

(18) The information terminal according to (17) wherein, the second display means is configured to generate the transaction start image information including an identification code of the second information terminal and a transaction code of a current transaction, and display the transaction start image information on the second image display unit, wherein, in the first information terminal, the first image reading means is configured to cause the first image reading unit to read the transaction start image information including the identification code of the second information terminal and the transaction code, and the first display means is configured to generate the payment completion image information including the identification code of the second information terminal and the transaction code read from the transaction start image information by the first image reading unit, and display the generated payment completion image information on the first image display unit, wherein, in the second information terminal, the receiving means is configured to determine whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increase the balance of the balance data stored in the second storage means.

(19) The information terminal according to (17) or (18), wherein the payment completion image information is displayed in an information code having information cells arranged two-dimensionally as information units.

(20) The information terminal according to any one of (17) to (19), wherein the balance data is stored in the second storage means in a form included in an information code having information cells arranged two-dimensionally as information units.

Further, another aspect of the present invention is summarized as a recording medium for a computer program according to (21) or (22) below.

(21) A recording medium for a computer program that is executed by a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the recording medium executing: a second storage function to store balance data belonging to the second information terminal; a second display function to display, on the second image display unit, transaction start image information including data of a transaction amount of the monetary transaction; a second image reading function to cause the second image reading unit to read, when payment completion image information indicating that payment has been completed in the first information terminal is displayed, the payment completion image information displayed by the first information terminal; and a receiving function to, when the payment completion image information has been read, increase balance of the balance data stored by the second storage function according to the transaction amount.

(22) The recording medium according to (21), wherein the second display function generates the transaction start image information including an identification code of the second information terminal and a transaction code of a current transaction, and displays the transaction start image information on the second image display unit, the second image reading function causes the second image reading unit to read, when payment completion image information indicating that payment has been completed in the first information terminal is displayed, the payment completion image information that is generated in the first information terminal to include the identification code of the second information terminal and the transaction code read from the transaction start image information by the first image reading unit, and the receiving function determines whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increases the balance of the balance data stored in the second storage means.

In addition, another aspect of the present invention is summarized as an offline monetary transaction method according to (23) to (25) below.

(23) An offline monetary transaction method for executing a monetary transaction based on monetary data between a first information terminal and a second information terminal offline using the first information terminal having a first image display unit and a first image reading unit, and the second information terminal having a second image display unit and a second image reading unit, the monetary transaction method including: by the first information terminal, in which balance data belonging to the first information terminal is stored, acquiring data of a transaction amount of the monetary transaction, when a user of the first information terminal gives approval for payment of the transaction amount, reducing balance of the balance data stored in the first information terminal according to the transaction amount, and when reduction of the balance of the balance data has been completed, displaying payment completion image information on the first image display unit; and by the second information terminal, in which balance data belonging to the second information terminal is stored, causing the second image reading unit to read the payment completion image information displayed by the first information terminal, and when the payment completion image information has been read, increasing an amount in the balance data stored in the second information terminal according to the transaction amount.

(24) The offline monetary transaction method according to (23), wherein the second information terminal includes an input unit configured to input the transaction amount, the monetary transaction method including: by the second information terminal, generating the transaction start image information including transaction information including the transaction amount input by the input unit, and displaying the transaction start image information on the second image display unit; and by the first information terminal, acquiring the transaction information from the transaction start image information, and in order for the user of the first information terminal to give approval for payment of the transaction amount, when the transaction start image information including the transaction information has been read, displaying an image for requesting the approval on the first image display unit of the first information terminal.

(25) The offline monetary transaction method according to (23) or (24), including: by the second information terminal, generating the transaction start image information including an identification code of the second information terminal and a transaction code of a current transaction, and displaying the transaction start image information on the second image display unit; by the first information terminal, causing the first image reading unit to read the transaction start image information including the identification code of the second information terminal and the transaction code, generating the payment completion image information including the identification code of the second information terminal and the transaction code read from the transaction start image information by the first image reading unit, and displaying the generated payment completion image information on the first image display unit; and by the second information terminal, determining whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increasing the balance of the balance data stored in the second storage means.

### Advantageous Effects of Invention

According to the present invention, it is possible to execute a monetary transaction based on monetary data between two information terminals even in an environment where no network is available.

### BRIEF DESCRIPTION OF DRAWINGS

Fig. 1 shows a diagram illustrating a configuration of a monetary transaction system according to a present embodiment.
Fig. 2 shows a diagram for explaining a usage situation of the monetary transaction system according to the present embodiment.
Fig. 3 shows block diagrams of a seller-side terminal and a buyer-side terminal according to the present embodiment.
Fig. 4 shows a diagram illustrating a transaction screen displayed on the seller-side terminal.
Fig. 5 shows diagrams illustrating top-up screens displayed on the buyer-side terminal.
Fig. 6 shows diagrams illustrating payment screens displayed on the buyer-side terminal.
Fig. 7 shows a diagram illustrating a payment completion screen displayed on the buyer-side terminal.
Fig. 8 shows a diagram for explaining an information code according to the present embodiment.
Fig. 9 shows a flowchart illustrating offline monetary transaction processing according to the present embodiment (Part 1).
Fig. 10 shows a flowchart illustrating the offline monetary transaction processing according to the present embodiment (Part 2).

### DESCRIPTION OF EMBODIMENTS

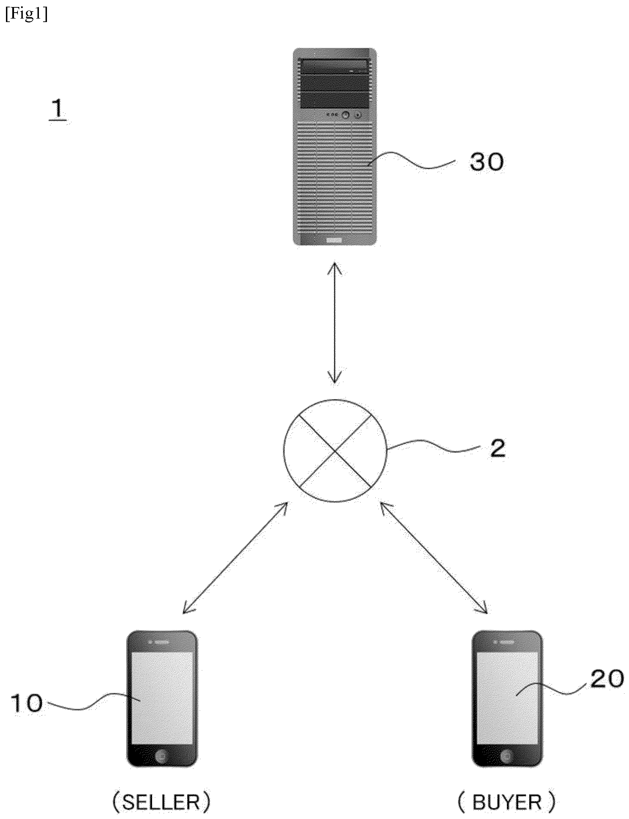

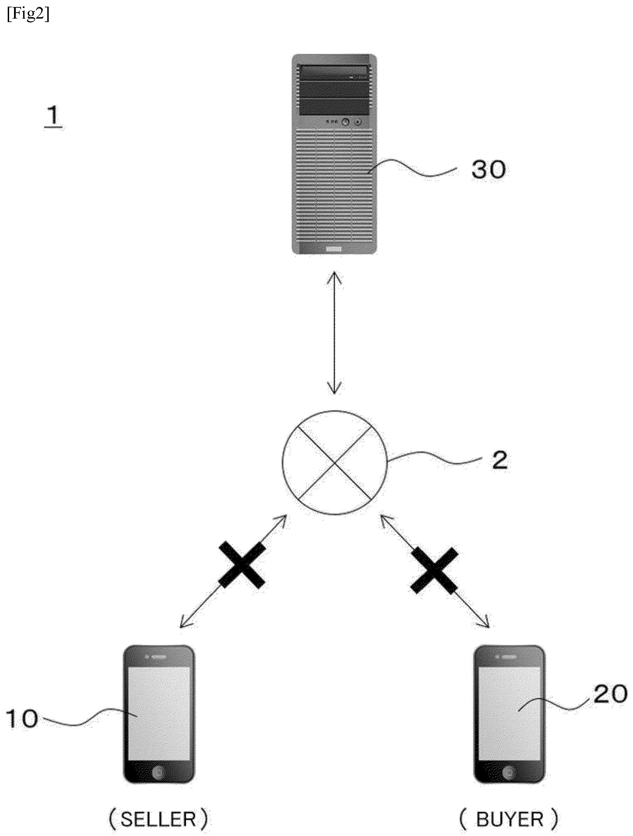

Embodiments of a monetary transaction system according to the present invention will be described with reference to the drawings. Fig. 1 is a diagram illustrating a configuration of a monetary transaction system 1 according to a present embodiment, and Fig. 2 is a diagram for explaining a usage situation of the monetary transaction system 1 according to the present embodiment. As illustrated in Figs. 1 and 2, the monetary transaction system 1 according to the present embodiment includes mobile terminals 10, 20 carried by two parties respectively between which a monetary transaction is conducted, and a server 30. As illustrated in Fig. 1, in an environment where network communication utilizing internet network 2 or the like is available, the mobile terminals 10, 20 and the server 30 can exchange information with each other by wireless or wired communication. On the other hand, as illustrated in Fig. 2, even in an environment where the network communication is not available, a monetary transaction based on electronic money can be conducted using the two mobile terminals 10, 20 in the present embodiment.

In the present embodiment, a description will be given by exemplifying a situation in which a buyer purchases a product from a seller in a shop, and a monetary transaction arising from the purchase of the product is conducted using a mobile terminal 10 at the seller side (second information terminal) and a mobile terminal 20 at the buyer side (first information terminal). Here, the mobile terminal 10 carried by the seller is also referred to as a seller-side terminal 10, and the mobile terminal 20 carried by the buyer is also referred to as a buyer-side terminal 20. Note that the monetary transaction system 1 according to the present embodiment can be utilized not only at the time of purchase of a product, but also for, for example, splitting a food and beverage bill, settlement of group travel expenses among the members, lump-sum collection of donations or the like, sending money to family, payment of reward, and the like. Further, in the exemplary situation illustrated in Figs. 1 and 2, the seller who receives electronic money and the buyer who pays the electronic money have a one-to-one relationship, but the present invention is not limited to this configuration, and a configuration is also possible in which, for example, one person (e.g., an organizer in charge of a food and beverage bill) receives electronic money from a plurality of persons (e.g., a plurality of participants in the food and beverage bill).

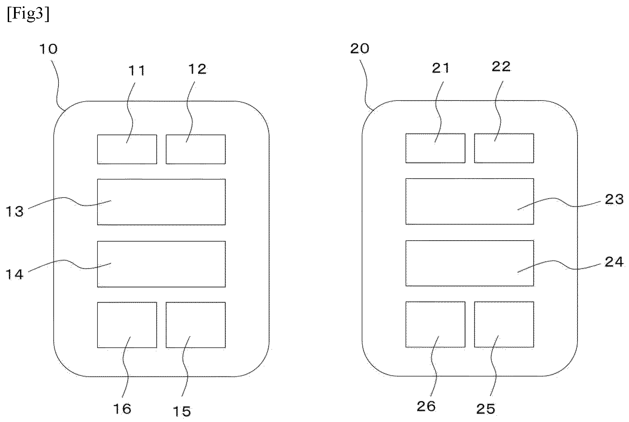

Fig. 3 shows block diagrams illustrating configurations of the seller-side terminal 10 and the buyer-side terminal 20. The seller-side terminal 10 is an information terminal such as a smartphone, a tablet, or a laptop computer carried by the seller, and as illustrated in Fig. 3, includes a camera 11, a communication unit 12, a display 13, an input unit 14, a storage unit 15, and an operation unit 16. The camera 11 performs reading of an information code displayed on the buyer-side terminal 20 and the like. The communication unit 12 communicates with the server 30 in the environment where the network communication is available. The display 13 displays, on a screen, an information code 41 including transaction information such as a transaction amount of a monetary transaction and the like. The input unit 14 allows the seller to input the transaction information such as a transaction amount. Note that a touch display that combines the display 13 and the input unit 14 may be used. The storage unit 15 stores a program for conducting the monetary transaction according to the present embodiment, and balance data of electronic money used in an offline monetary transaction. The operation unit 16 executes the program stored in the storage unit 15, thereby realizing a seller-side transaction function to execute the monetary transaction based on the electronic money offline, and a balance data update function to update, in the environment where the network communication is available, server balance data of the seller-side terminal 10 stored in the server 30 such that the server balance data stored in the server 30 matches terminal balance data stored in the seller-side terminal 10. The above program can run as an application or app in the seller-side terminal 10. Each function of the seller-side terminal 10 will be described below.

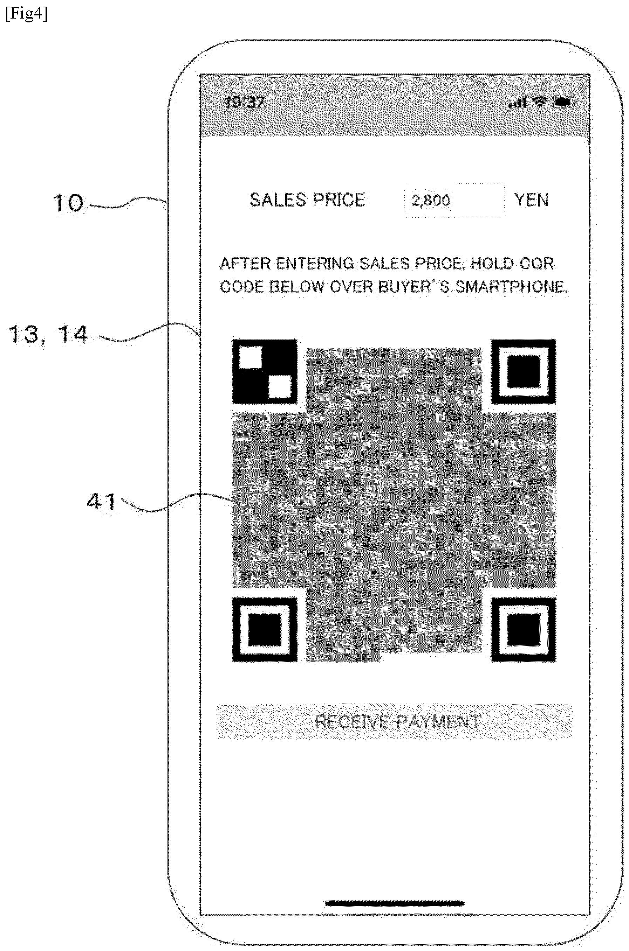

As illustrated in Fig. 4, when the seller has input a transaction amount via the input unit 14, the seller-side transaction function of the seller-side terminal 10 creates an information code 41 including transaction information, and displays the created information code 41 on the display 13. The information code 41 displayed by the seller-side transaction function includes the transaction information such as a seller code for identifying the seller, a transaction code for identifying the transaction, a timestamp indicating transaction validity time, data of the transaction amount, a mobile phone number of the seller, and a product identification number of the seller-side terminal 10. In the present embodiment, in the buyer-side terminal 20, reading the information code 41 displayed by the seller-side terminal 10 causes payment of the electronic money to be executed. Note that the transaction code is a unique code per transaction, and for example, epoch second or a sequential number under certain management can be used.

In the present embodiment, after the payment is executed in the buyer-side terminal 20, an information code 42 indicating payment completion is displayed on a display 23 of the buyer-side terminal 20. In this case, when the information code 42 displayed on the buyer-side terminal 20 has been read with the camera 11, the seller-side transaction function increases an amount in the terminal balance data of the electronic money stored in the storage unit 15 according to the transaction amount. In this manner, even in a case where the monetary transaction based on the electronic money is conducted offline, the seller-side terminal 10 can confirm that the payment has been completed in the buyer-side terminal 20 by reading the information code 42 indicating the payment completion displayed on the buyer-side terminal 20, allowing the seller-side terminal 10 to appropriately complete the transaction.

The balance data update function of the seller-side terminal 10 updates, in the environment where the network communication such as the internet network 2 is available, the server balance data stored in the server 30 such that it matches the terminal balance data of the electronic money stored in the seller-side terminal 10. That is, in the present embodiment, in the environment where the network communication such as the internet network 2 is available, the seller-side terminal 10 and the buyer-side terminal 20 can conduct a monetary transaction based on the electronic money via the server 30 as conventionally, and balance data of the seller carrying the seller-side terminal 10 is stored as the server balance data in the server 30. Meanwhile, in the environment where the network communication is not available, since the seller-side terminal 10 is unable to access the server 30, conducting the offline monetary transaction according to the present invention results in a mismatch between the terminal balance data stored in the storage unit 15 of the seller-side terminal 10 and the server balance data stored in the server 30. Therefore, in a case where the offline monetary transaction has been conducted, when the network communication becomes available, the balance data update function accesses the server 30 and updates the server balance data stored in the server 30 such that it matches the terminal balance data stored in the seller-side terminal 10.

The buyer-side terminal 20 is an information terminal such as a smartphone, a tablet, or a laptop computer carried by the buyer, and as illustrated in Fig. 3, includes a camera 21, a communication unit 22, the display 23, an input unit 24, a storage unit 25, and an operation unit 26. The camera 21 performs reading of an information code 41 including transaction information displayed on the seller-side terminal 10 and the like. The communication unit 22 communicates with the server 30 in the environment where the network communication is available. The display 23 displays, on a screen, an information code 42 indicating payment completion or the like. The input unit 24 allows the buyer to input payment information or the like. Note that a touch display that combines the display 23 and the input unit 24 may be used. The storage unit 25 stores a program for conducting a monetary transaction according to the present embodiment, and balance data of electronic money. The operation unit 26 executes the program stored in the storage unit 25, thereby realizing a top-up function to top up the electronic money in the environment where the network communication is available, and a buyer-side transaction function to execute the monetary transaction based on the electronic money offline. The above program can run as an application or app in the buyer-side terminal 20. Each function of the buyer-side terminal 20 will be described below.

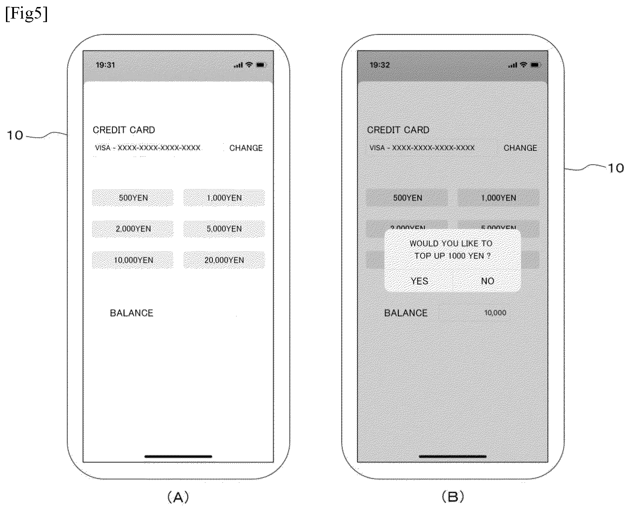

In the environment where the network communication is available, the top-up function of the buyer-side terminal 20 accesses the server 30 and tops up the electronic money. Note that the top-up function can be performed by a publicly known method. For example, in a case where the electronic money is topped up by credit card settlement, as illustrated in Fig. 5 (A), the top-up function displays a screen for inputting an amount to be topped up on the display 23. When the buyer inputs the amount to be topped up, as illustrated in Fig. 5 (B), a top-up confirmation screen is displayed. When the buyer gives approval for the top-up, the buyer-side terminal 20 accesses the server 30, and terminal balance data stored in the buyer-side terminal 20 is updated according to the amount that has been topped up.

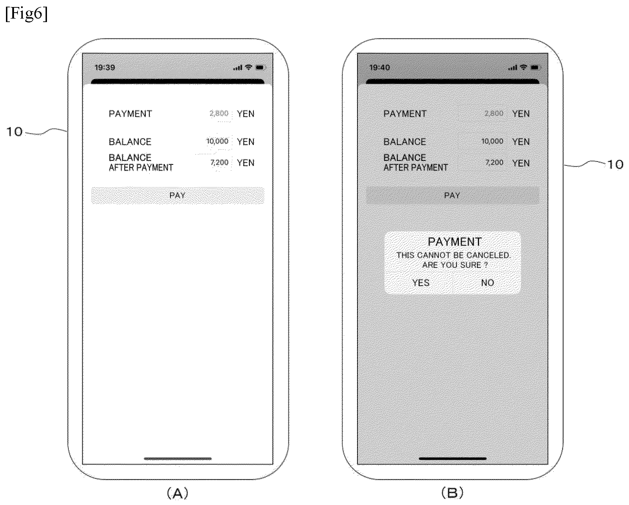

The buyer-side transaction function of the buyer-side terminal 20 executes, based on an information code 41 including transaction information displayed by the seller-side terminal 10, payment for the monetary transaction. Specifically, when the information code 41 including the transaction information displayed by the seller-side terminal 10 has been read, the buyer-side transaction function extracts the transaction information form the information code 41, and as illustrated in Fig. 6 (A), for example, displays the transaction amount, balance, and balance after the payment on the screen of the display 23 according to the extracted transaction information. In addition, the buyer-side transaction function displays a payment button on the screen to request approval for the payment for the transaction. When the buyer presses the payment button, as illustrated in Fig. 6 (B), the buyer-side transaction function displays a payment confirmation popup. When the buyer gives approval for the payment, the buyer-side transaction function deducts the transaction amount from the terminal balance data stored in the storage unit 25 of the buyer-side terminal 20, and completes the payment. Note that, in a case where the transaction amount is greater than the balance of the terminal balance data, the buyer-side transaction function displays an error indicating that the transaction cannot be executed on the screen of the display 23 (or may display the payment button as inoperable).

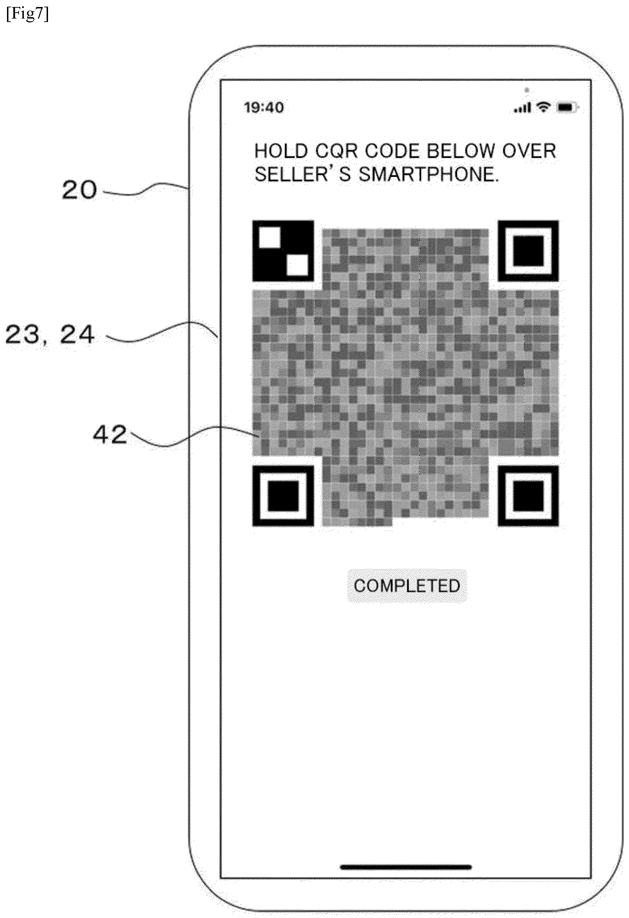

Further, when the payment has been completed, the buyer-side transaction function of the buyer-side terminal 20 creates an information code 42 indicating payment completion, and as illustrated in Fig. 7, displays the created information code 42 on the display 23. The reason for this is as follows. Conventionally, in a case of an online monetary transaction, the seller-side terminal 10 can confirm, via the server 30, that payment has been completed in the buyer-side terminal 20 while, in a case of an offline monetary transaction, the seller-side terminal 10 would be unable to confirm whether payment has been completed in the buyer-side terminal 20. Thus, the information code 42 indicating payment completion in such a manner is displayed on the buyer-side terminal 20, and the information code 42 indicating the payment completion is read by the seller-side terminal 10, thereby enabling the seller-side terminal 10 to confirm the payment completion even in an offline monetary transaction.

In the present embodiment, the storage units 15, 25 of the buyer-side terminal 10 and the seller-side terminal 20 each store in advance personal information such as an account number, an individual number, and a face image of the seller or the buyer in a form included in an information code 43 such as a two-dimensional code. The information code 43 can be utilized when receiving a personal-information-based service such as a medical service or a government service by using the seller-side terminal 10 and the buyer-side terminal 20. In the present embodiment, terminal balance data can be stored in advance in such an information code 43. It is preferable that, when offline, the seller-side terminal 10 and the buyer-side terminal 20 are not allowed to selectively use the personal information unless they are unlocked by biometric authentication or the like.

In addition, it is preferable that the terminal balance data stored in the storage units 15, 25 (terminal balance data included in each information code 43) is encrypted from a security perspective. For example, a key string indicating the terminal balance data can be transformed using a predetermined function f(x) and further encrypted using RSA encryption. For further security enhancement, it is also effective to make disassembly of program more difficult (to obfuscate source codes, for example, to change names such as class names, method names, and variable names in the source codes to names difficult for humans to read, to encrypt strings including functions, or to insert a meaningless Loop or Goto statement). Further, it is also effective to change the program regularly.

The server 30 is located on the internet network 2, and has functions to exchange data with the seller-side terminal 10 and the buyer-side terminal 20, and to perform electronic settlement in a case where the seller-side terminal 10 and the buyer-side terminal 20 can connect to the internet network 2. In addition, as described above, the server 30 stores the balance data of the seller-side terminal 10 and the buyer-side terminal 20 as the server balance data. In a case where the terminal balance data of the seller-side terminal 10 and the buyer-side terminal 20 does not match the server balance data due to an offline monetary transaction, the server 30 can perform update processing of making the server balance data match the terminal balance data. When the update processing is performed, in order to prevent fraud, an inquiry may be made whether an increased amount in the seller-side terminal 10 matches a reduced amount in the buyer-side terminal 20 in the monetary transaction between the seller-side terminal 10 and the buyer-side terminal 20 by referring to the transaction code or the like.

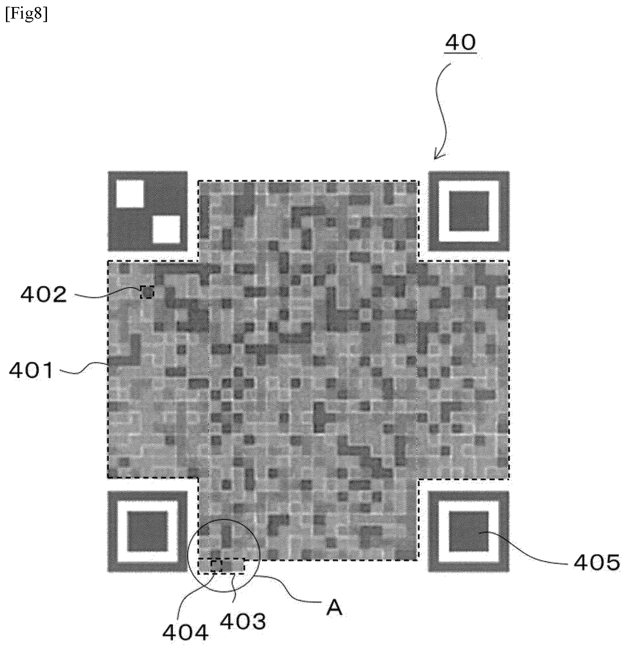

Next, an information code 40 according to the present embodiment will be described. Fig. 8 is a diagram illustrating an example of the information code 40 according to the present embodiment. In the present embodiment, a configuration using a color QR code constituted by information cells with three or more colors is illustrated. However, the present invention is not limited to this configuration, and a QR code (registered trademark) constituted by white and black information cells arranged in a lattice, a bar code, or the like may be used.

As illustrated in Fig. 8, the information code 40 according to the present embodiment is a square-shaped two-dimensional code including: an information code area 401 consisting of colored information cells 402 with two or more colors, which serve as information indication units; a teacher code area 403 having the same colors as the information cells 402 and the same number of colors as the colors of the information cells 402for identifying the colors of the information cells 402; and a finder pattern 405.

Particularly, the information code 40 according to the present embodiment has a plurality of teacher cells 404 in the teacher code area 403 in order to enhance the accuracy of identifying the colors of the information cells 402. The color types of the teacher cells 404 correspond to the color types of the information cells 402, so that the colors of the information cells 402 can be identified with high accuracy by comparing the colors of the teacher cells 404 with the colors of the information cells 402. Particularly, as the color types increase, the colors become similar in hue to each other in the color QR code. Thus, proper identification of the colors of the information cells 402 is sometimes difficult due to a light environment such as illumination, a print environment of the information code 40, a display environment of the information code 40 on a display or the like, color fading with age of the printed information code 40, and the like. Even in such cases, it is possible to properly understand information of the information cells 402 by referring to the teacher cells 404 to identify the colors of the information cells 402. For example, when color information of an information cell 402 is purple tint and is difficult to identify as being red like or blue like, if the color information is closer to red with respect to color information of a purple teacher cell 404, the color of the information cell 402 can be determined as red. Note that the color information can be quantified as RGB values or CMY values.

By changing an indication pattern of the information cells 402 that are information units, specific information including a certain amount of textual information and/or binary information can be recorded in the information code area 401. Contents of the specific information recorded in the information code area 401 are not particularly limited, and, in the present embodiment, personal information including biometric information for biometric authentication can be stored. The personal information may include, in addition to the biometric information, information of a mobile phone number, an individual number, a passport number, an account number, a license number, a name, a social insurance number, a birthday, a birthplace, an original family name, and the like. Furthermore, the biometric information may include a face image, fingerprint information, iris information, a hand shape, a retina, a blood vessel, a voice, an ear shape, and the like.

In the information code 40 according to the present embodiment, the information code area 401 in which the specific information is recorded consists of the information cells 402 with three or more colors, and thus the amount of information that can be recorded is greater than that in an information code consisting of information cells with two colors of white and black. However, since the data amount that can be stored in the information code 40 is smaller than that in another recording medium, in a case where an image of a whole face with resolution that allows face authentication is recorded, the storage capacity of the information code area 401 might be possibly insufficient even if it consists of the information cells 402 with four colors. Therefore, the information code 40 according to the present embodiment stores, as a face image for face authentication, not the whole face but only a part of the face of a user such as eyes or a mouth of the user that can serve as feature points in the face authentication, so that the face image for the face authentication can be recorded in the information code 40.

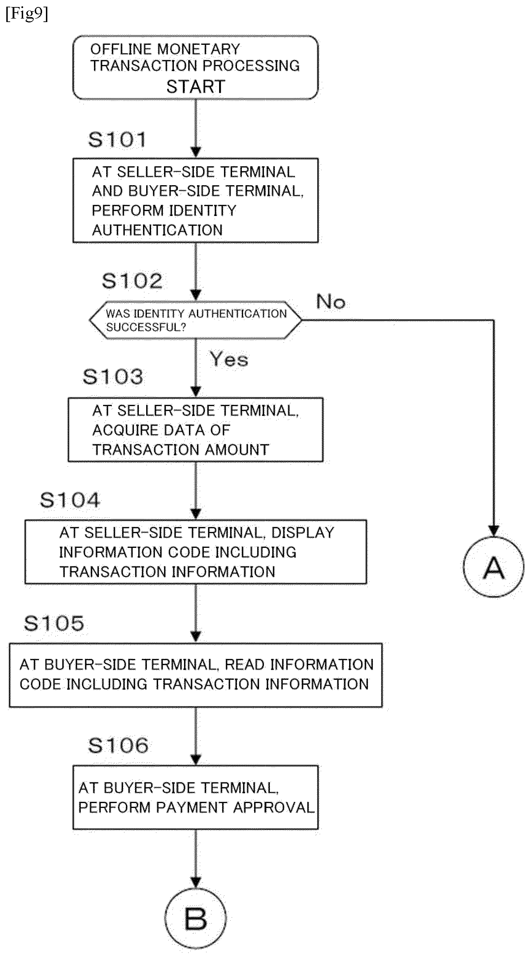

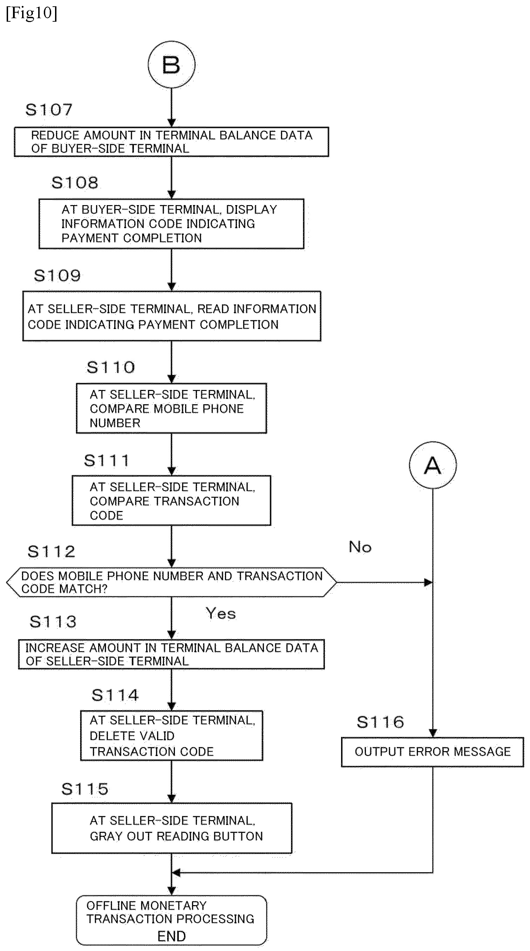

Next, offline monetary transaction processing according to the present embodiment will be described. Figs. 9 and 10 show a flowchart illustrating the offline monetary transaction processing according to the present embodiment. It is assumed that, in the offline monetary transaction processing illustrated in Figs. 9 and 10, the buyer-side terminal 20 has electronic money sufficient for a transaction amount, which has been topped up therein in advance in an environment where the network communication such as the internet is available. Further, in the following description, the seller-side terminal 10 is a mobile terminal such as a smartphone having a phone call function, and stores its mobile phone number or product identification number in the storage unit 15 as information for identifying the seller-side terminal 10 itself. Examples of the product identification number for identifying the seller-side terminal 10 itself can include a MAC address and an IMEI number. As the information for identifying the seller-side terminal 10 itself, both of the mobile phone number and the product identification number may be used, or one of the mobile phone number of the seller and the product identification number of the seller-side terminal 10 may alternatively be used. In the following description, the mobile phone number of the seller is used as the information for identifying the seller-side terminal 10.

In step S101, identity authentication is performed at each of the seller-side terminal 10 and the buyer-side terminal 20. For example, in the present embodiment, when the application or app is launched, first, a face image is read by the cameras 11, 21 and face authentication is performed in the seller-side terminal 10 and the buyer-side terminal 20. Note that a method for the face authentication is not particularly limited, and any publicly known method can be used. In addition, face information required for the face authentication can be captured in advance by the cameras 11, 21, and stored in the storage units 15, 25. Then, in step S102, it is determined whether the face authentication was successful at the seller-side terminal 10 and the buyer-side terminal 20. In a case where the face authentication has succeeded in both of the seller-side terminal 10 and the buyer-side terminal 20, the processing proceeds to step S103. On the other hand, in a case where the face authentication has failed in either seller-side terminal 10 or the buyer-side terminal 20, as the offline monetary transaction processing illustrated in Fig. 9 can no longer be continued, in step S116, an error message is displayed, and then the offline monetary transaction processing is terminated.

In step S103, the seller-side terminal 10 acquires data of the transaction amount of the monetary transaction. For example, the seller-side terminal 10 may cause the seller to input the transaction amount via the input unit 14 by displaying, on the display 13, a screen prompting the seller to input the transaction amount, thereby acquiring the data of the transaction amount input by the seller.

In step S104, the seller-side terminal 10 generates an information code 41 including transaction information, and displays the generated information code 41 on the display 13. Specifically, first, the seller-side transaction function of the seller-side terminal 10 generates a new transaction code and timestamp, and stores the generated transaction code in the storage unit 15. Further, the seller-side transaction function generates an information code 41 (transaction start image information) including the generated transaction code and timestamp, the seller code and the mobile phone number of the seller stored in the storage unit 15, and the data of the transaction amount acquired in step S103. Then, as illustrated in Fig. 4, the seller-side transaction function displays the generated information code 41 on the display 13. In the present embodiment, a color QR code is generated and displayed as an information code 41 as illustrated in Fig. 8, and the color QR code can be generated using a publicly known method. Further, the transaction code is preferably a unique code at least in the seller-side terminal 10, and combining the transaction code with the seller code, the mobile phone number of the seller, or the product identification number of the seller-side terminal 10 can create a completely unique code.

In step S105, the buyer-side terminal 20 reads the information code 41 displayed by the seller-side terminal 10 in step S104. Specifically, the buyer-side transaction function of the buyer-side terminal 20 activates the camera 21, and prompts the buyer to read the information code 41 including the transaction information displayed by the seller-side terminal 10. When the buyer operates the camera 21 to capture the information code 41 displayed by the seller-side terminal 10, the buyer-side transaction function extracts the transaction information such as the seller code, the transaction code, the transaction amount, the timestamp, the mobile phone number of the seller from read image data of the information code 41.

When a certain period of time (for example, one minute) has elapsed since displaying the information code 41 in step S104, the seller-side terminal 10 invalidates the displayed information code 41. In this case, the seller-side terminal 10 can utilize the timestamp included in the information code 41 to determine whether the predetermined period of time has elapsed. In a case where the information code 41 is invalidated, automatically or manually updating the information code 41 allows the seller-side terminal 10 to display the information code 41 again. When the information code 41 is updated, the transaction code and timestamp are newly updated. However, the seller code, the transaction amount, and the mobile phone number of the seller are unchanged and included in the information code 41 again.

In step S106, the buyer-side transaction function of the buyer-side terminal 20 performs payment approval. For example, the buyer-side transaction function reads the transaction information from the information code 41 in step S105, and as illustrated in Fig. 6 (A), displays, on the display 23, a screen showing information of the transaction amount included in the read transaction information, the terminal balance data stored in the buyer-side terminal 20, balance after the payment, and the like, as well as a payment button and the like. When the buyer presses the payment button displayed on the display 23, as illustrated in Fig. 6 (B), the buyer-side transaction function displays a screen for requesting approval for the payment. In response, when the buyer gives an instruction to approve the payment via the input unit 24, the payment approval is performed in the buyer-side terminal 20.

Subsequently, proceeding to Fig. 10, in step S107, since the payment has been approved, the buyer-side transaction function of the buyer-side terminal 20 reduces an amount in the balance data of the electronic money. For example, as illustrated in Fig. 6 (A) and (B), in a case where the terminal balance data of the electronic money is 10000 yen and the payment (transaction amount) is 2800 yen, the buyer-side transaction function deducts 2800 yen from 10000 yen in the terminal balance data of the electronic money to update the terminal balance data to 7200 yen.

In step S108, the buyer-side transaction function of the buyer-side terminal 20 displays an information code 42 indicating payment completion on the display 23. Specifically, the buyer-side transaction function generates an information code 42 including data of the seller code, the transaction code, the transaction amount, a timestamp, the mobile phone number of the seller, and the like, as well as data indicating payment completion, and as illustrated in Fig. 7, displays the generated information code 42 on the display 23. In step S109, the seller-side transaction function of the seller-side terminal 10 reads the information code 42 indicating the payment completion displayed on the display 23 of the buyer-side terminal 20 in step S108.

When a certain period of time (for example, one minute) has elapsed since displaying the information code 42 in step S108, the buyer-side terminal 20 can invalidate the displayed information code 42. In this case, the buyer-side terminal 20 can utilize the timestamp included in the information code 42 to determine whether the predetermined period of time has elapsed. In a case where the information code 42 is invalidated, automatically or manually updating the information code 42 allows the buyer-side terminal 20 to display the information code 42 again. When the information code 42 is updated, the timestamp is newly updated. However, the seller code, the transaction code, the transaction amount, and the mobile phone number of the seller remain unchanged and included in the information code 42.

In step S110, the seller-side transaction function of the seller-side terminal 10 compares the mobile phone number. Specifically, the seller-side transaction function determines whether the mobile phone number of the seller stored in the storage unit 15 of the seller-side terminal 10 matches the mobile phone number of the seller included in the information code 42 read in step S109.

In addition, in step S111, the seller-side transaction function compares the transaction code. Specifically, the seller-side transaction function determines whether the valid transaction code (transaction code not yet deleted in step S114 to be described later, which is hereinafter also referred to as a valid transaction code) stored in the storage unit 15 of the seller-side terminal 10 matches the transaction code included in the information code 42 read in step S109.

In step S112, the seller-side transaction function determines whether both of the mobile phone number and the transaction code match. In a case where either the mobile phone number or the transaction code does not match, it is considered that there is a possibility of error or fraud by a third party (to be described in detail below). Then, the processing proceeds to step S116, and the seller-side transaction function displays an error message that the transaction cannot be conducted, and terminates the offline monetary transaction processing. On the other hand, in a case where both of the mobile phone number and the transaction code match, the processing proceeds to step S113.

In step S113, the seller-side transaction function of the seller-side terminal 10 increases an amount in the terminal balance data of the seller-side terminal 10 based on the information code 42 indicating the payment completion read in step S109. Specifically, the seller-side transaction function confirms that the payment has been completed in the buyer-side terminal 20 using the information code 42 indicating the payment completion, and increase the amount in the terminal balance data of the electronic money of the seller-side terminal 10 by the transaction amount.

In subsequent step S114, the seller-side terminal 10 deletes the transaction code stored in the storage unit 15. Then, in step S115, the seller-side terminal 10 turns off (for example, grays out) a display (a button such as an icon) for reading the information code 42 of the buyer-side terminal 20. In this manner, in the present embodiment, when the increase in the terminal balance data has been completed, the seller-side terminal 10 deletes the transaction code from the seller-side terminal 10 and disables reading. This can prevent the same seller-side terminal 10 from reading the information code 42 displayed by the buyer-side terminal 20 again and from increasing the amount in the terminal balance data more than once for the same transaction. Even in a case where step S115 is not performed and the seller-side terminal 10 remains able to read the information code 42, the deletion of the transaction code in step S114 makes it impossible for the seller-side terminal 10 to increase the amount in the terminal balance data again because, when the information code 42 displayed by the buyer-side terminal 20 is read again (step S109), it is determined that the transaction code does not match in step S112.

Further, determining the match of the transaction code and the mobile phone number in step S112 can prevent fraud where, when another mobile terminal that is not involved in the transaction (mobile terminal that has not displayed the information code 41 in step S104, which is hereinafter referred to as an unrelated terminal) has read the information code 42 displayed by the buyer-side terminal 20, an amount in its terminal balance data is increased. That is, in the present embodiment, in the unrelated terminal other than the seller-side terminal 10 that has displayed the information code 41, the transaction code regarding the current transaction is not generated in step S104, and it is not possible to convey the mobile phone number of the unrelated terminal to the buyer-side terminal 20. As a result, in step S112, matching with the transaction code and the mobile phone number included in the information code 42 displayed by the buyer-side terminal 20 fails, and in step S116, an error message is displayed, for example, "This is a different transaction. Please check the trading item and the purchaser, and retry capturing an information code" or the like.

Further, after the reduction in the terminal balance data of the buyer-side terminal 20 is performed in step S107, if the seller-side terminal 10 cannot immediately perform step S109 and the subsequent processing (within a certain period of time while the buyer-side terminal 20 displays the information code 42 in step S108, for example, one minute) due to reasons such as the seller-side terminal 10 being dropped and broken, the increase in the terminal balance data for the transaction might become unable to be performed in the seller-side terminal 10. Therefore, in step S108, the buyer-side terminal 20 may encrypt and store the information code 42 in the storage unit 25, and an expiration period of the information code 42 may be set to, for example, one year or infinite. In this case, after the seller-side terminal 10 becomes available, the buyer-side terminal 20 displays the information code 42 again to allow step S109 and the subsequent processing to be resumed and completed.

The offline monetary transaction processing illustrated in Fig. 9 is performed as described above. Note that, at the time of completion of the offline monetary transaction processing, the terminal balance data of the seller-side terminal 10 does not match the server balance data of the seller-side terminal 10 stored in the server 30. Therefore, after the offline monetary transaction processing, when the network communication becomes available, the data update function of the seller-side terminal 10 accesses the server 30 and updates the server balance data stored in the server 30 such that it matches the terminal balance data stored in the seller-side terminal 10.

Fig. 9 illustrates an exemplary configuration in which the offline monetary transaction starts when the seller inputs the transaction amount in the seller-side terminal 10. However, the present invention is not limited to this configuration, and for example, the offline monetary transaction may start when the buyer inputs the transaction amount in the buyer-side terminal 20. For example, when the buyer uses the buyer-side terminal 20 to read a QR code, which includes identification information of the seller and is placed in the shop, and further input the transaction amount, it can be considered that step S105 of the above-described offline monetary transaction processing has been performed.

As described above, in the present embodiment, the buyer-side terminal 20 reads an information code 41 that is displayed by the seller-side terminal 10 and includes transaction information to acquire the transaction information such as data of a transaction amount. When the buyer gives approval for payment of the transaction amount, the buyer-side terminal 20 deducts the transaction amount from the terminal balance data of the electronic money belonging to the buyer-side terminal 20, and then displays an information code 42 indicating payment completion on the display 23. Further, the seller-side terminal 10 can confirm that the payment has been completed in the buyer-side terminal 20 by reading the information code 42 indicating the payment completion displayed by the buyer-side terminal 20, and increase the amount in the terminal balance data of the seller-side terminal 10 by the transaction amount. In the present embodiment, this makes it possible to conduct a monetary transaction using electronic money between the seller-side terminal 10 and the buyer-side terminal 20 even in the offline environment where the network communication is not available to the seller-side terminal 10 and the buyer-side terminal 20.

The preferred embodiment example of the present invention has been described above. However, the technical scope of the present invention is not limited to the descriptions of the above embodiment. Various alterations and modifications can be made to the above embodiment example, and such altered or modified modes also fall within the technical scope of the present invention.

For example, in the above embodiment, the seller-side terminal 10 and the buyer-side terminal 20 may be configured not to exchange data that can identify the seller-side terminal 10 and the buyer-side terminal 20 from a privacy protection perspective. For example, the seller-side terminal 10 and the buyer-side terminal 20 display information codes 41, 42 including only a transaction code and a transaction amount as transaction information, so that the system cannot track information about with whom the transaction has been conducted, what transaction has been conducted, and the like as in a monetary transaction purely by an actual currency.

Further, in the above embodiment, electronic money is used as an example of the monetary data used by the seller-side terminal 10 and the buyer-side terminal 20. However, the present invention is not limited to this configuration, and for example, a digital currency, points, a virtual currency, or the like may be used as the monetary data.

In addition, in the above embodiment, Fig. 8 illustrates an exemplary configuration of the information code 40 in which the teacher code area 403 is placed on the lower left side of the information code area 401. However, where the teacher code area 403 is placed is not particularly limited, and for example, the teacher code area 403 may be placed on the upper side, the lower right side, or the like of the information code area 401. Moreover, in the exemplary configuration illustrated in Fig. 8, the teacher code area 403 is placed in contact with the information code area 401, but the teacher code area 403 may be placed away from the information code area 401. Furthermore, in the exemplary configuration illustrated in Fig. 8, the information code 40 has only one teacher code area 403, but the present invention is not limited to this configuration. The information code 40 may have a plurality of teacher code areas 403 such as one teacher code area 403 placed on the upper side of the information code area 401 and another on the lower side thereof. In addition, in the information code 40, one or more teacher code areas 403 may be placed inside the information code area 401.

### Reference Signs List

1: monetary transaction system
   10: seller-side terminal
      11: camera
      12: communication unit
      13: display
      14: input unit
      15: storage unit
      16: operation unit
   20: buyer-side terminal
      21: camera
      22: communication unit
      23: display
      24: input unit
      25: storage unit
      26: operation unit
   30: server
   40 to 42: information code
      401: information code area
      402: information cell
      403: teacher code area
      404: teacher cell
      405: finder pattern
2: internet network

## Claims

1. A monetary transaction system comprising: a first information terminal having a first image display unit and a first image reading unit; and a second information terminal having a second image display unit and a second image reading unit, wherein the monetary transaction system executes a monetary transaction based on monetary data between the first information terminal and the second information terminal offline,
wherein the second information terminal includes a second display means configured to display, on the second image display unit, transaction start image information including data of a transaction amount of the monetary transaction,
the first information terminal includes:
a first storage means configured to store balance data belonging to the first information terminal;
a first image reading means configured to cause the first image reading unit to read the transaction start image information displayed on the second image display unit of the second information terminal;
an acquisition means configured to acquire the data of the transaction amount from the transaction start image information read by the first image reading unit;
a payment means configured to, when a user of the first information terminal gives approval for payment of the transaction amount, reduce balance of the balance data stored in the first storage means according to the transaction amount; and
a first display means configured to, when reduction of the balance of the balance data has been completed by the payment means, display payment completion image information on the first image display unit, and
the second information terminal includes:
a second storage means configured to store balance data belonging to the second information terminal;
a second image reading means configured to cause the second image reading unit to read the payment completion image information displayed by the first information terminal; and
a receiving means configured to, when the payment completion image information has been read, increase balance of the balance data stored in the second storage means according to the transaction amount.

2. The monetary transaction system according to claim 1, wherein the second information terminal includes an input means configured to input the transaction amount, and
in the second information terminal, the second display means is configured to generate the transaction start image information including transaction information including the transaction amount input by the input means, and display the transaction start image information on the second image display unit,
wherein, in the first information terminal, the acquisition means is configured to acquire the transaction information from the transaction start image information, and the first display means is configured to, in order for the user of the first information terminal to give approval for payment of the transaction amount, when the transaction start image information including the transaction information has been read, display an image for requesting the approval on the first image display unit of the first information terminal.

3. The monetary transaction system according to claim 1, wherein, in the second information terminal, the second display means is configured to generate the transaction start image information including an identification code of the second information terminal and a transaction code of a current transaction, and display the transaction start image information on the second image display unit,
wherein, in the first information terminal,
the first image reading means is configured to cause the first image reading unit to read the transaction start image information including the identification code of the second information terminal and the transaction code, and
the first display means is configured to generate the payment completion image information including the identification code of the second information terminal and the transaction code read from the transaction start image information by the first image reading unit, and display the generated payment completion image information on the first image display unit,
wherein, in the second information terminal, the receiving means is configured to determine whether the identification code of the second information terminal and the transaction code included in the payment completion image information displayed by the first information terminal match the identification code of the second information terminal and the transaction code stored in advance in the second information terminal, and, when the identification code of the second information terminal and the transaction code match, increase the balance of the balance data stored in the second storage means.

4. The monetary transaction system according to claim 1, wherein the payment completion image information is displayed in an information code having information cells arranged two-dimensionally as information units.

5. The monetary transaction system according to claim 1, wherein the monetary transaction is performed only within the balance of the balance data of the first information terminal.

6. The monetary transaction system according to claim 1, wherein the balance data of the first information terminal is stored in the first storage means of the first information terminal in a form included in an information code having information cells arranged two-dimensionally as information units, and
the balance data of the second information terminal is stored in the second storage means of the second information terminal also in a form included in an information code having information cells arranged two-dimensionally as information units.

7. An information terminal that is a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the second information terminal comprising:
a second storage means configured to store balance data belonging to the second information terminal;
an input means configured to input a transaction amount of the monetary transaction;
a second display means configured to display, on the second image display unit, transaction start image information including data of the transaction amount input by the input means;
a second image reading means configured to cause the second image reading unit to read, when payment completion image information indicating that payment has been completed in the first information terminal is displayed, the payment completion image information displayed by the first information terminal; and
a receiving means configured to, when the payment completion image information has been read, increase balance of the balance data stored in the second storage means according to the transaction amount.

8. A computer program that is executed by a first information terminal in a monetary transaction system including the first information terminal having a first image display unit and a first image reading unit, and a second information terminal having a second image display unit and a second image reading unit, wherein the monetary transaction system executes a monetary transaction based on monetary data between the first information terminal and the second information terminal offline, the computer program executing:
a first storage function to store balance data belonging to the first information terminal;
a first image reading function to cause the first image reading unit to read transaction start image information that is displayed on the second image display unit of the second information terminal and includes data of a transaction amount of the monetary transaction;
an acquisition function to acquire the data of the transaction amount from the transaction start image information read by the first image reading function;
a payment function to, when a user of the first information terminal gives approval for payment of the transaction amount, reduce balance of the balance data stored by the first storage function according to the transaction amount; and
a first display function to, when reduction of the balance of the balance data has been completed by the payment function, display payment completion image information on the first image display unit.

9. A computer program that is executed by a second information terminal in a monetary transaction system including a first information terminal having a first image display unit and a first image reading unit, and the second information terminal having a second image display unit and a second image reading unit, wherein the monetary transaction system executes a monetary transaction based on monetary data between the first information terminal and the second information terminal offline, the computer program executing:
a second storage function to store balance data belonging to the second information terminal;
a second display function to display, on the second image display unit, transaction start image information including data of a transaction amount of the monetary transaction;
a second image reading function to cause the second image reading unit to read, when payment completion image information indicating that payment has been completed in the first information terminal is displayed, the payment completion image information displayed by the first information terminal; and
a receiving function to, when the payment completion image information has been read, increase balance of the balance data stored by the second storage function according to the transaction amount.

10. An offline monetary transaction method for executing a monetary transaction based on monetary data between a first information terminal and a second information terminal offline using the first information terminal having a first image display unit and a first image reading unit, and the second information terminal having a second image display unit and a second image reading unit, the monetary transaction method comprising:
by the first information terminal, in which balance data belonging to the first information terminal is stored, acquiring data of a transaction amount of the monetary transaction, when a user of the first information terminal gives approval for payment of the transaction amount, reducing balance of the balance data stored in the first information terminal according to the transaction amount, and when reduction of the balance of the balance data has been completed, displaying payment completion image information on the first image display unit; and
by the second information terminal, in which balance data belonging to the second information terminal is stored, causing the second image reading unit to read the payment completion image information displayed by the first information terminal, and when the payment completion image information has been read, increasing an amount in the balance data stored in the second information terminal according to the transaction amount.
